# EUROPÄISCHE PATENTSCHRIFT

(11) **EP 2 732 892 B1**
(45) Veröffentlichungstag und Bekanntmachung des Hinweises auf die Patenterteilung: **15.11.2017**
(21) Anmeldenummer: 13183860.9
(22) Anmeldetag: 11.09.2013
(51) Int. Cl.: B23D 45/12, B23B 3/06

(54) **Vorrichtung zum Abtrennen von Abschnitten von zylindrischen Werkstücken**
Apparatus for cutting off sections from cylindrical workpieces
Dispositif de séparation de sections de pièces cylindriques

(30) Priorität: 14.11.2012 DE 102012110966
(43) Veröffentlichungstag der Anmeldung: 21.05.2014
(73) Patentinhaber: Goldfuß, Thomas, 72336 Balingen (DE)
(72) Erfinder:
(74) Vertreter: Kohler Schmid Möbus Patentanwälte

(56) Entgegenhaltungen:
- EP-A1- 2 061 617
- EP-A1- 2 206 569
- WO-A1-2010/127737
- DE-A1-102010 038 169
- DE-U1- 29 608 547

## Beschreibung

Die Erfindung betrifft eine Vorrichtung zum Abtrennen von Abschnitten von zylindrischen Werkstücken mit einer Spanneinrichtung zum Spannen des Werkstücks und mit einer radial gegen das Werkstück anstellbaren Trennvorrichtung, gemäß dem Oberbegriff des Anspruchs 1, und ein Verfahren gemäß dem Oberbegriff des Anspruchs 12. Eine solche Vorrichtung und ein solches Verfahren sind EP2206569 zu entnehmen.
Die DE 10 2010 038 169 A1 beschreibt eine Trennvorrichtung, bei der von einem auf einem Drehkarussell aufliegenden hohlzylindrischen Körper durch Horizontalschnitte von oben nach unten mehrere ringförmige Abschnitte abgetrennt werden. Ist ein Ring abgetrennt, wird dieser von einem Manipulator entnommen und auf einem Ringestapel abgelegt. Bei der bekannten Vorrichtung besteht die Gefahr, dass bei Verwendung einer Säge als Trennvorrichtung das Sägeblatt vom Gewicht des abzutrennenden Rings am Ende des Trennvorgangs eingeklemmt wird. Um dies zu vermeiden, ist an der bekannten Vorrichtung ein Manipulator vorgesehen, der den Ring kurz vor dem vollständigen Abtrennen ergreift und sein Gewicht aufnimmt. Dieser Manipulator weist eine aufwendige Mechanik auf, wodurch der Aufbau der Vorrichtung komplizierter und teurer wird.

Die EP 2 286 569 A1 beschreibt das Anritzen und anschließende Abreißen eines Abschnitts von einem senkrecht in einer Spanneinrichtung gehaltenen Rohr. Jeder abgetrennte Abschnitt wird anschließend an der Trennfläche nachbearbeitet und dann einzeln aus der Maschine herausbewegt. Ein Trennen großer schwerer Ringe ist mit dieser Vorrichtung nicht möglich. Außerdem ist das Verfahren sehr zeitaufwändig.

Aus der DE 296 08 547 U1 ist das Nachschneiden einer Bohrkrone bekannt, wobei die Bohrkrone dazu in der Bohrmaschine belassen wird. Es wird nur ein einziger Trennschnitt zum Planschneiden der Krone durchgeführt.

Die EP 2 861 617 A1 lehrt das beidseitige Spannen eines senkrecht ausgerichteten Rohres, von dem Nacheinander mehrere Abschnitte abgetrennt werden. Nach jedem Trennvorgang muss der abgetrennte Abschnitt einzeln entnommen und dann das Restwerkstück durch die untere Spanneinrichtung erneut gespannt werden, was keine rationelle Bearbeitung zulässt. Außerdem kann es durch das beidseitige Spannen zu einem Einklemmen des Trennwerkzeugs am Ende des Trennvorgangs kommen.

Der vorliegenden Erfindung liegt die Aufgabe zugrunde, eine Trennvorrichtung bereitzustellen, mit der auf rationelle Weise eine Vielzahl von Abschnitten von einem zylindrischen Werkstück abgetrennt werden kann.

Die Aufgabe wird gelöst durch eine Vorrichtung zum Abtrennen von Abschnitten von zylindrischen Werkstücken mit den Merkmalen des Anspruchs 1.

Bei der erfindungsgemäßen Vorrichtung wird das Werkstück von der Spanneinrichtung hängend gehalten, bis alle Trennvorgänge abgeschlossen sind. Der abzutrennende Abschnitt befindet sich jeweils unterhalb der Schnittebene. Dadurch werden zuerst alle Trennschnitte entsprechend der gewünschten Anzahl von abzutrennenden Abschnitten durchgeführt und dann erst der gesamte Stapel bestehend aus den abgetrennten Abschnitten und einem eventuell vorhandenen Reststück des Werkstücks abgelegt, wodurch sich die Gesamtbearbeitungszeit des Werkstücks erheblich verkürzt. Die Trennvorrichtung muss nicht zwischenzeitlich abgeschaltet werden, um einen abgetrennten Abschnitt zu entnehmen. Dabei weist die Vorrichtung insbesondere dann hinsichtlich der Bearbeitungszeit besondere Vorteile auf, wenn mit der Trennvorrichtung nacheinander eine Vielzahl von Abschnitten von unten nach oben durch Horizontalschnitte abgetrennt werden.

Da der obere Bereich des Werkstücks von den Spannelementen gehalten wird und sich der mindestens eine abzutrennende Abschnitt unterhalb der Schnittebene befindet, kann es auch bei der Verwendung einer Säge als Trennvorrichtung nicht zu einem Einklemmen der Säge kommen. Dabei kann die Trennvorrichtung vorzugsweise mindestens ein Kreissägeblatt aufweisen.

Bei einer bevorzugten Ausgestaltung ist das Werkstück über die Spanneinrichtung rotierend antreibbar. Dadurch verkürzen sich die Trennzeiten im Vergleich zum Trennen eines stillstehenden Werkstücks weiter erheblich. Wird außerdem eine Trennvorrichtung mit mindestens einem Kreissägeblatt verwendet, können das Kreissägeblatt und das Werkstück gleich- oder gegenläufig rotierend angetrieben und dadurch die Schnittqualität und der Werkzeugverschleiß beeinflusst werden.

Weitere Vorteile ergeben sich, wenn die Spanneinrichtung an der Unterseite eines Drehtisches angeordnet ist, auf dem Antriebsmotoren für die Spanneinrichtung angeordnet sind. Die Motoren rotieren also mit der Spanneinrichtung mit. Auch ein Schaltschrank kann auf dem Drehtisch angeordnet werden. Damit kann die Anzahl von Drehdurchführungen für Kabel zu der Spanneinrichtung minimiert werden, wodurch sich der Aufbau der Vorrichtung vereinfacht.

Weiter ist es vorteilhaft, wenn die Anstellkraft der Axialhubelemente gegen die Unterseite des Werkstücks regelbar ist. Durch einen nachlassenden Anpressdruck der Axialhubelemente kann in der Endphase eines Trennschnittes die Säge entlastet werden. Dabei können die einzelnen Axialhubelemente auch separat regelbar sein.

Zur Erleichterung der Handhabung des Werkstücks kann die Vorrichtung außerdem eine höhenverstellbare Palette zur Aufnahme des Werkstücks vor dem Trennvorgang und zur Aufnahme des Stapels aus dem mindestens einen abgetrennten Abschnitt sowie dem Restabschnitt des Werkstücks nach dem Trennvorgang aufweisen.

Vorzugsweise kann die Palette dabei mit Aussparungen versehen sein, durch die die Axialhubelemente unter die Unterseite des Werkstücks und zurück bewegbar sind. Dadurch kann die Spanneinrichtung das Werkstück von der Palette aufnehmen, nachdem diese das Werkstück nach oben in den Bereich der Spanneinrichtung bewegt hat.

Die Handhabung des Werkstücks kann weiter dadurch erleichtert werden, dass die Palette in einer horizontalen Ebene aus der Vorrichtung heraus bewegbar ist. Insbesondere bei sehr großen und schweren Werkstücken ist dies von Vorteil. Das Werkstück kann außerhalb der Vorrichtung mittels eines Gabelstaplers und/oder eines Krans auf die Palette abgesetzt und dort mindestens grob zentriert werden. Anschließend wird die Palette in die Vorrichtung und nach oben zur Spanneinrichtung bewegt. Durch die Spanneinrichtung findet die endgültige Zentrierung des Werkstücks statt. Außerdem kann mit der Spanneinrichtung das Werkstück hängend in der Vorrichtung gehalten und rotierend angetrieben werden, während die Trennvorrichtung den mindestens einen Abschnitt abtrennt.

Besondere Vorteile weist eine erfindungsgemäße Vorrichtung zum Abtrennen von Abschnitten von hohlzylindrischen Werkstücken auf, bei der die Spannelemente gegen die Innenwand des Werkstücks anstellbar sind und die Axialhubelemente durch das Innere des Werkstücks unter die Unterseite des Werkstücks bewegbar sind. Die abgetrennten Abschnitte sind hier ringförmig. Der Einsatz der Vorrichtung für hohlzylindrische Werkstücke hat den Vorteil, dass diese Werkstücke von innen gespannt werden können, wodurch die Trennvorrichtung das Werkstück ungestört von der Mantelseite aus bearbeiten kann.

Dabei ist es weiter vorteilhaft, wenn jedem Spannelement ein Axialhubelement zugeordnet ist, das höhenverstellbar unterhalb des Spannelements angeordnet ist. Die Spannelemente und die Axialhubelemente greifen dann an den gleichen Umfangspositionen des Werkstücks an. Für eine gute Zentrierung des Werkstücks können zweckmäßigerweise drei, jeweils um 120° beabstandete Spann- und Axialhubelemente vorgesehen sein.

Die Erfindung betrifft außerdem ein Verfahren zum Abtrennen von Abschnitten von einem zylindrischen Werkstück mit den Merkmalen des Anspruchs 12.

Bei einer bevorzugten Variante des Verfahrens wird das Werkstück während des Trennvorgangs rotierend angetrieben.

Es werden nacheinander mehrere Abschnitte vom Werkstück abgetrennt, wobei die Trennvorrichtung zuerst den untersten Abschnitt und dann die nachfolgenden Abschnitte abtrennt und alle Abschnitte sowie das Reststück des Werkstücks stützend von unten gehalten werden, bis alle Trennschnitte abgeschlossen sind.

Nachfolgend wird ein bevorzugtes Ausführungsbeispiel einer erfindungsgemäßen Vorrichtung mit Bezug auf die Zeichnung näher beschrieben.

Es zeigen:
- Fig. 1: eine perspektivische Ansicht einer erfindungsgemäßen Vorrichtung;
- Fig. 2: eine Detailseitenansicht der Trennvorrichtung und der Spanneinrichtung der Vorrichtung aus Fig. 1;
- Fig. 3: eine perspektivische Detailansicht der Spanneinrichtung der Vorrichtung aus Fig. 1;
- Fig. 4: eine perspektivische Detailansicht des unteren Bereichs der Spanneinrichtung und der Trennvorrichtung der Vorrichtung aus Fig. 1.

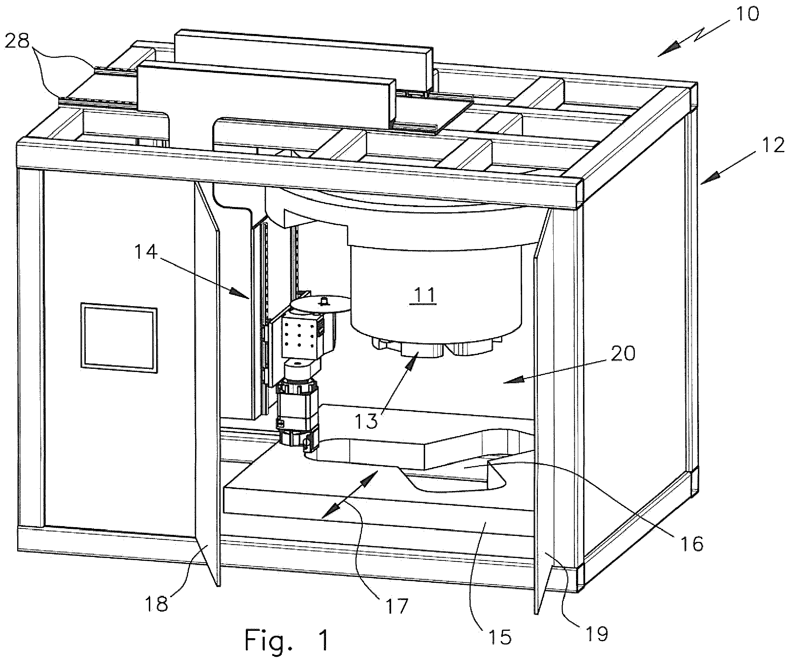

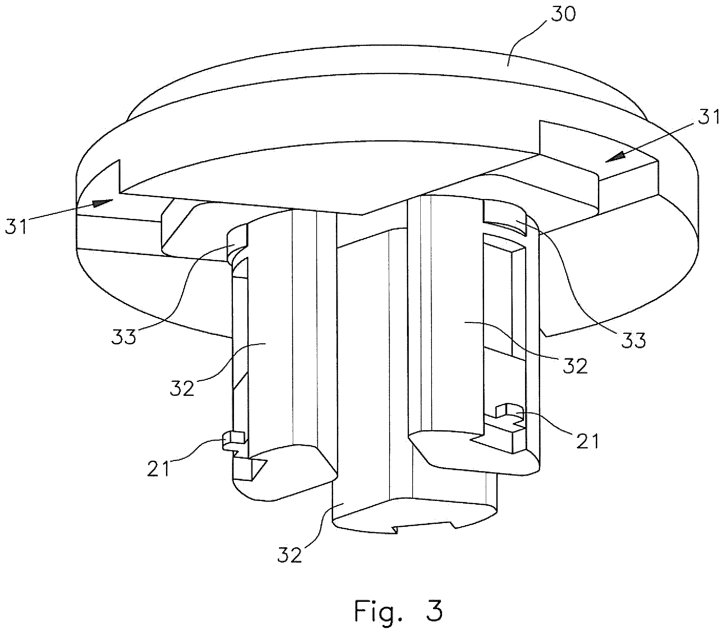

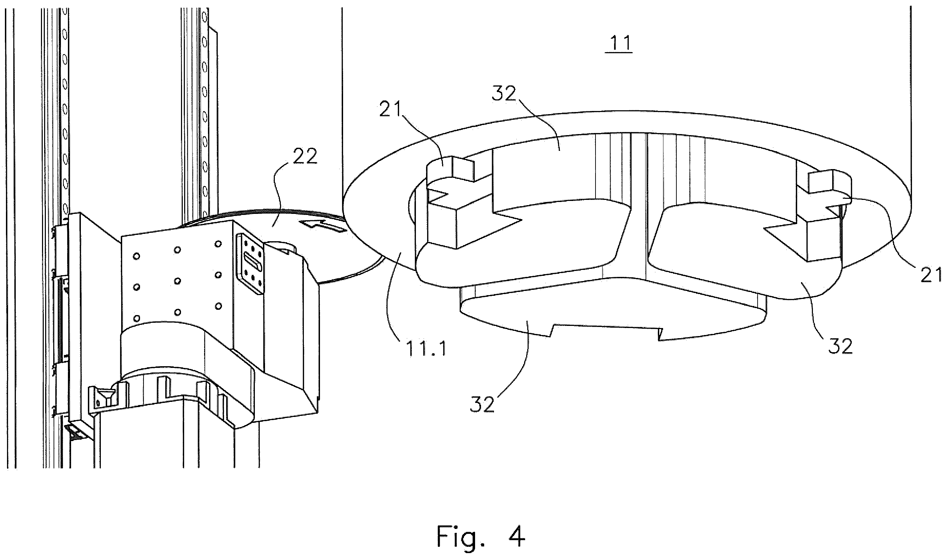

Die in Fig. 1 gezeigte Vorrichtung 10 zum Abtrennen von Abschnitten von zylindrischen Werkstücken 11 weist ein Gehäuse 12 auf, in dem eine Spanneinrichtung 13 für das Werkstück 11 sowie eine Trennvorrichtung 14 angeordnet sind. Außerdem ist im Gehäuse 12 eine Palette 15 mit einer sternförmigen Öffnung 16 angeordnet, die in Richtung des Doppelpfeils 17 aus einer durch Türen 18, 19 verschließbaren Öffnung 20 im Gehäuse 12 heraus und herein bewegbar ist. Dadurch kann das Werkstück 11 außerhalb der Vorrichtung 10 auf der Palette 15 abgestellt und dann von dieser in die Vorrichtung 10 transportiert werden, was insbesondere bei großen und schweren Werkstücken 11 ein Vorteil ist. Die Palette 15 ist außerdem höhenverstellbar in der Vorrichtung 10 angeordnet, sodass das Werkstück 11 von der Palette 15 nach oben zur Spanneinrichtung 13 bewegt und dort von der Spanneinrichtung 13 aufgenommen werden kann. Durch die sternförmige Öffnung 16 in der Palette 15 ist es dabei möglich, dass die Spanneinrichtung 13 mit in den Fig. 3 und 4 näher dargestellten Axialhubelementen 21 unter die Unterseite des Werkstücks 11 fahren kann.

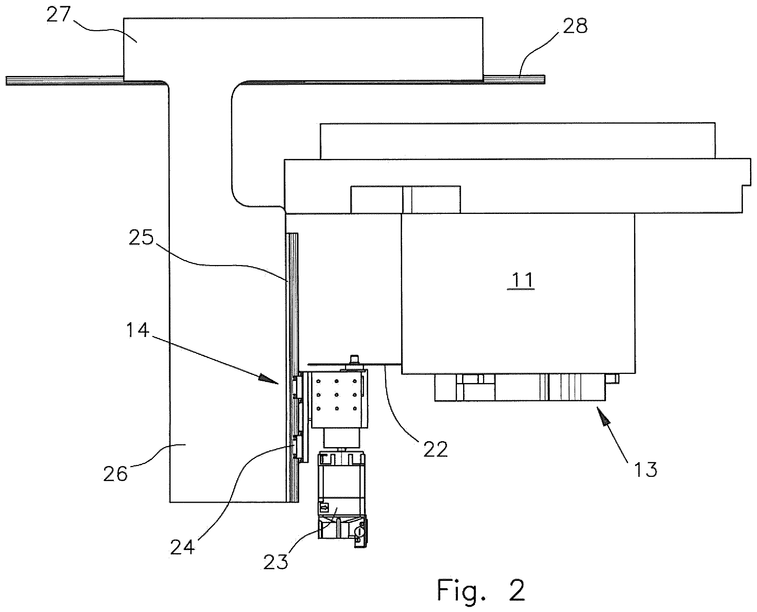

Aus der Detailansicht von Fig. 2 ist ersichtlich, dass die Trennvorrichtung 14 im dargestellten Beispiel eine Säge mit einem Kreissägeblatt 22 ist. Das Kreissägeblatt 22 ist zusammen mit einem Antriebsmotor 23 an einem Vertikalschlitten 24 angeordnet, der entlang von Vertikalschienen 25 gleitet, die an einem Träger 26 angeordnet sind. Der Träger 26 wiederum ist Teil eines Horizontalschlittens 27, der auf Schienen 28 auf der Oberseite des Gehäuses 12 läuft (s. Fig. 1). Somit kann das Kreissägeblatt 22 sowohl radial gegen das Werkstück 11 zur Durchführung von Horizontalschnitten angestellt als auch in der Höhe verstellt werden. Dadurch ist es möglich, nacheinander mehrere ringförmige Abschnitte vom Werkstück 11 abzutrennen, wobei das Abtrennen von unten nach oben erfolgt, sodass die abgetrennten Abschnitte unterhalb der Schnitteben liegen und das Sägeblatt 22 nicht durch das Gewicht eines bereits abgetrennten Abschnitts belastet wird. Die abgetrennten Abschnitte werden zusammen mit dem Restwerkstück in der Spanneinrichtung 13 gehalten, bis der letzte Horizontalschnitt durchgeführt wurde. Anschließend wird der Stapel aus Ringen von der Palette 15, die nach oben bis zur Unterseite des Stapels fährt, sodass die Spanneinrichtung 13 den Stapel freigeben kann, aufgenommen und aus der Vorrichtung 10 herausbewegt.

Fig. 3 verdeutlicht den Aufbau der Spanneinrichtung 13. Sie weist einen Drehtisch 30 auf, der hängend im Gehäuse 12 angeordnet und rotierend antreibbar ist. Der Drehtisch 30 weist auf seiner Unterseite sternförmig angeordnete Führungen 31 auf, in denen Spannelemente 32 radial verschiebbar gelagert sind. Insgesamt sind drei, jeweils um 120° versetzt zueinander angeordnete Führungen 31 und Spannelemente 32 vorgesehen. Jedes der Spannelemente weist eine feststehende Spannbacke 33 auf, die gegen den oberen Abschnitt der Innenwand des Werkstücks 11 anstellbar sind, wodurch gleichzeitig eine Zentrierung des Werkstücks 11 erfolgen kann. Unterhalb der Spannbacken 33 sind jeweils höhenverstellbare Axialhubelemente 21 vorgesehen, die radial weiter nach außen vorstehen als die Spannbacken 33 und dadurch unter die Unterseite 11.1 des Werkstücks bewegbar sind, wenn die Spannelemente 32 in den Führungen 31 nach außen bewegt werden, wie auch insbesondere Fig. 4 verdeutlicht. Anschließend werden die Axialhubelemente nach oben bewegt, sodass das Werkstück hängend in der Spannvorrichtung 13 gehalten werden kann. Der Anpressdruck der Axialhubelemente 21 ist dabei einstellbar. Die Elemente 21 können auch einzeln angesteuert werden. Falls notwendig, lassen sich dadurch beim Horizontalschnitt eventuell auftretende Klemmkräfte auf das Sägeblatt 22 reduzieren.

## Patentansprüche

1. Vorrichtung zum Abtrennen von Abschnitten von zylindrischen Werkstücken (11) mit einer Spanneinrichtung (13) zum Spannen des Werkstücks (11) und mit einer radial gegen das Werkstück anstellbaren höhenverstellbaren Trennvorrichtung (14), mit der mindestens ein Abschnitt durch einen Horizontalschnitt vom Werkstück (11) abtrennbar ist, wobei der abzutrennende Abschnitt unterhalb der Schnittebene liegt, wobei die Spanneinrichtung (13) gegen den oberen Bereich des Werkstücks (11) radial anstellbare Spannelemente (32) aufweist, **dadurch gekennzeichnet, dass** die Spanneinrichtung außerdem unter die Unterseite (11.1) des Werkstücks (11) bewegbare und höhenverstellbare Axialhubelemente (21) aufweist, so dass mit der Trennvorrichtung (14) nacheinander mehrere Abschnitte von unten nach oben durch Horizontalschnitte abtrennbar sind und die abgetrennten Abschnitte und ein eventuell vorhandenes Reststück des Werkstücks als Stapel aus der Vorrichtung entnehmbar sind.

2. Vorrichtung nach Anspruch 1, **dadurch gekennzeichnet, dass** die Trennvorrichtung (14) mindestens ein Kreissägeblatt (22) aufweist.

3. Vorrichtung nach Anspruch 1 oder 2, **dadurch gekennzeichnet, dass** das Werkstück (11) über die Spanneinrichtung (13) rotierend antreibbar ist.

4. Vorrichtung nach Anspruch 2 und 3, **dadurch gekennzeichnet, dass** das Kreissägeblatt (22) und das Werkstück (11) gleich- oder gegenläufig rotierend antreibbar sind.

5. Vorrichtung nach Anspruch 3 oder 4, **dadurch gekennzeichnet, dass** die Spanneinrichtung (13) an der Unterseite eines Drehtisches (30) angeordnet ist, auf dem Antriebsmotoren für die Spanneinrichtung (13) angeordnet sind.

6. Vorrichtung nach einem der vorhergehenden Ansprüche, **dadurch gekennzeichnet, dass** die Anstellkraft der Axialhubelemente (21) gegen die Unterseite (11.1) des Werkstücks (11) regelbar ist.

7. Vorrichtung nach einem der vorhergehenden Ansprüche, **dadurch gekennzeichnet, dass** sie eine höhenverstellbare Palette (15) zur Aufnahme des Werkstücks (11) vor dem Trennvorgang und zur Aufnahme des Stapels aus dem mindestens einen abgetrennten Abschnitt sowie dem Restabschnitt des Werkstücks (11) nach dem Trennvorgang aufweist.

8. Vorrichtung nach Anspruch 7, **dadurch gekennzeichnet, dass** die Palette (15) mit Aussparungen (16) versehen ist, durch die die Axialhubelemente (21) unter die Unterseite (11.1) des Werkstücks (11) und zurück bewegbar sind.

9. Vorrichtung nach Anspruch 7 oder 8, **dadurch gekennzeichnet, dass** die Palette (15) in einer horizontalen Ebene aus der Vorrichtung (10) heraus bewegbar ist.

10. Vorrichtung nach einem der vorhergehenden Ansprüche zum Abtrennen von Abschnitten von hohlzylindrischen Werkstücken (11), **dadurch gekennzeichnet, dass** die Spannelemente (32) gegen die Innenwand des Werkstücks (11) anstellbar sind und die Axialhubelemente (21) durch das Innere des Werkstücks (11) unter die Unterseite (11.1) des Werkstücks (11) bewegbar sind.

11. Vorrichtung nach Anspruch 10, **dadurch gekennzeichnet, dass** jedem Spannelement (32) ein Axialhubelement (21) zugeordnet ist, das höhenverstellbar am Spannelement (32) angeordnet ist.

12. Verfahren zum Abtrennen von Abschnitten von einem zylindrischen Werkstück (11) mit Hilfe einer Trennvorrichtung (14), **gekennzeichnet durch** die Schritte:
- vertikales Ausrichten der Längsachse des Werkstücks (11) und Spannen des Werkstücks (11) in seinem oberen Bereich;
- Stützen des Werkstücks (11) auf seiner Unterseite (11.1);
- Abtrennen mehrerer Abschnitte vom Werkstück (11) durch einen Horizontalschnitt mit Hilfe der Trennvorrichtung (14), wobei die Trennvorrichtung (14) zuerst den untersten Abschnitt und dann die nachfolgenden Abschnitte abtrennt und alle Abschnitte sowie das Reststück des Werkstücks (11) stützend von unten gehalten werden, bis alle Trennschnitte abgeschlossen sind.

13. Verfahren nach Anspruch 12, **dadurch gekennzeichnet, dass** das Werkstück (11) während des Trennvorgangs rotierend angetrieben wird.

## Claims

1. Device for separating portions from cylindrical workpieces (11), comprising a clamping arrangement (13) for clamping the workpiece (11) and a height-adjustable separation device (14) which can be placed radially against the workpiece and by means of which at least one portion can be separated from the workpiece (11) by a horizontal cut, the portion to be separated being located below the cutting plane, wherein the clamping arrangement (13) comprises clamping elements (32) that can be placed radially against the upper region of the workpiece (11), **characterised in that** the clamping arrangement also comprises height-adjustable axial lifting elements (21) which can be moved to below the underside (11.1) of the workpiece (11), so that a plurality of portions can be separated successively by horizontal cuts from below to above by means of the separation device (14), and the separated portions and any remaining portion of the workpiece can be removed from the device as a stack.

2. Device according to Claim 1, **characterised in that** the separation device (14) has at least one circular saw blade (22).

3. Device according to Claim 1 or 2, **characterised in that** the workpiece (11) can be driven in rotation by means of the clamping arrangement (13).

4. Device according to Claims 2 and 3, **characterised in that** the circular saw blade (22) and the workpiece (11) can be driven to rotate in the same direction or in opposite directions.

5. Device according to Claim 3 or 4, **characterised in that** the clamping arrangement (13) is arranged on the underside of a revolving table (30) on which drive motors for the clamping arrangement (13) are arranged.

6. Device according to any one of the preceding claims, **characterised in that** the application force of the axial lifting elements (21) against the underside (11.1) of the workpiece (11) can be regulated.

7. Device according to any one of the preceding claims, **characterised in that** it has a height-adjustable pallet (15) for receiving the workpiece (11) before the separation process and for receiving the stack of the at least one separated portion and the remaining portion of the workpiece (11) after the separation process.

8. Device according to Claim 7, **characterised in that** the pallet (15) is provided with openings (16) through which the axial lifting elements (21) can be moved to below the underside (11.1) of the workpiece (11) and back.

9. Device according to Claim 7 or 8, **characterised in that** the pallet (15) can be moved out of the device (10) in a horizontal plane.

10. Device according to any one of the preceding claims for separating portions from hollow cylindrical workpieces (11), **characterised in that** the clamping elements (32) can be placed against the inner wall of the workpiece (11) and the axial lifting elements (21) can be moved through the interior of the workpiece (11) to below the underside (11.1) of the workpiece (11).

11. Device according to Claim 10, **characterised in that** there is associated with each clamping element (32) an axial lifting element (21) which is arranged in a height-adjustable manner on the clamping element (32).

12. Method for separating portions from a cylindrical workpiece (11) with the aid of a separation device (14), **characterised by** the steps:
- vertically aligning the longitudinal axis of the workpiece (11) and clamping the workpiece (11) in its upper region;
- supporting the workpiece (11) on its underside (11.1);
- separating a plurality of portions from the workpiece (11) with horizontal cuts by means of the separation device (14), wherein the separation device (14) first separates the lowest portion and then the following portions, and all the portions together with the remaining portion of the workpiece (11) are retained and supported from below until all the separation cuts have been concluded.

13. Method according to Claim 12, **characterised in that** the workpiece (11) is driven in rotation during the separation process.

## Revendications

1. Dispositif servant à détacher des sections de pièces (11) cylindriques, avec un système de serrage (13) servant à serrer la pièce (11) et avec un dispositif de séparation (14) pouvant être ajusté en hauteur, pouvant être placé de manière radiale contre la pièce, lequel dispositif de séparation permet de détacher de la pièce (11) au moins une section par une coupe horizontale, dans lequel la section à détacher se trouve sous le plan de coupe, dans lequel le système de serrage (13) présente des éléments de serrage (32) pouvant être placés de manière radiale contre la zone supérieure de la pièce (11), **caractérisé en ce que** le système de serrage présente par ailleurs des éléments de levage axial (21) pouvant être déplacés sous le côté inférieur (11.1) de la pièce (11) et pouvant être ajustés en hauteur de sorte que plusieurs sections peuvent être détachées les unes après les autres depuis le bas vers le haut par des coupes horizontales avec le dispositif de séparation (14) et les sections détachées et une partie restante éventuellement présente de la pièce peuvent être retirées du dispositif sous la forme d'une pile.

2. Dispositif selon la revendication 1, **caractérisé en ce que** le dispositif de séparation (14) présente au moins une lame de scie circulaire (22).

3. Dispositif selon la revendication 1 ou 2, **caractérisé en ce que** la pièce (11) peut être entraînée en rotation par l'intermédiaire du système de serrage (13).

4. Dispositif selon la revendication 2 et 3, **caractérisé en ce que** la lame de scie circulaire (22) et la pièce (11) peuvent être entraînées en rotation dans le même sens ou dans le sens opposé.

5. Dispositif selon la revendication 3 ou 4, **caractérisé en ce que** le système de serrage (13) est disposé au niveau du côté inférieur d'un plateau tournant (30), sur lequel des moteurs d'entraînement pour le système de serrage (13) sont disposés.

6. Dispositif selon l'une quelconque des revendications précédentes, **caractérisé en ce que** la force de mise en place des éléments de levage axial (21) contre le côté inférieur (11.1) de la pièce (11) peut être réglée.

7. Dispositif selon l'une quelconque des revendications précédentes, **caractérisé en ce qu'**il présente une palette (15) pouvant être ajustée en hauteur servant à recevoir la pièce (11) avant l'opération de séparation et servant à recevoir la pile issue de l'au moins une section détachée et de la section restante de la pièce (11) après l'opération de séparation.

8. Dispositif selon la revendication 7, **caractérisé en ce que** la palette (15) est pourvue d'évidements (16), par lesquels les éléments de levage axial (21) peuvent être déplacés sous le côté inférieur (11.1) de la pièce (11) et être ramenés.

9. Dispositif selon la revendication 7 ou 8, **caractérisé en ce que** la palette (15) peut être déplacée hors du dispositif (10) dans un plan horizontal.

10. Dispositif selon l'une quelconque des revendications précédentes servant à détacher des sections de pièces (11) cylindriques creuses, **caractérisé en ce que** les éléments de serrage (32) peuvent être placés contre la paroi intérieure de la pièce (11), et les éléments de levage axial (21) peuvent être déplacés à travers l'intérieur de la pièce (11) sous le côté inférieur (11.1) de la pièce (11).

11. Dispositif selon la revendication 10, **caractérisé en ce qu'**est associé à chaque élément de serrage (32) un élément de levage axial (21), qui est disposé de manière à pouvoir être ajusté en hauteur au niveau de l'élément de serrage (32).

12. Procédé servant à détacher des sections d'une pièce (11) cylindrique à l'aide d'un dispositif de séparation (14), **caractérisé par** les étapes consistant à :
- orienter de manière verticale l'axe longitudinal de la pièce (11) et serrer la pièce (11) dans sa zone supérieure ;
- soutenir la pièce (11) sur son côté inférieur (11.1) ;
- détacher plusieurs sections de la pièce (11) par une coupe horizontale à l'aide du dispositif de séparation (14), dans lequel le dispositif de séparation (14) détache dans un premier temps la section la plus basse puis les sections qui suivent et toutes les sections ainsi que la partie restante de la pièce (11) sont maintenues en étant soutenues par en bas jusqu'à ce que les coupes de séparation soient finies.

13. Procédé selon la revendication 12, **caractérisé en ce que** la pièce (11) est entraînée en rotation au cours de l'opération de séparation.
